# EUROPÄISCHE PATENTSCHRIFT

(11) **EP 1 493 359 B1**
(45) Veröffentlichungstag und Bekanntmachung des Hinweises auf die Patenterteilung: **15.08.2007**
(21) Anmeldenummer: 04013814.1
(22) Anmeldetag: 11.06.2004
(51) Int. Cl.: A47C 17/80, A47C 17/70

(54) **Verwendung einer Mehrzweckliege innerhalb eines Kraftfahrzeugs**
Use of a multifunctional bed inside a motor vehicle
Utilisation d'un lit multifonctionel à l'intérieur d'une voiture automobile

(30) Priorität: 01.07.2003 DE 10329460
(43) Veröffentlichungstag der Anmeldung: 05.01.2005
(73) Patentinhaber: MAN Nutzfahrzeuge Österreich AG, 1230 Wien (AT)
(72) Erfinder: Schwingeler, Klaus, 80999 München (DE); Hinze, Peter, 85250 Altomünster (DE)

(56) Entgegenhaltungen:
- DE-A- 3 625 633
- FR-A- 1 069 936
- JP-A- 8 019 578
- US-A- 5 170 521
- US-B1- 6 230 340

## Beschreibung

Die Erfindung betrifft die Verwendung einer Mehrzweckliege mit einer Liegefläche für eine Person innerhalb eines Kraftfahrzeugs, insbesondere Militärfahrzeugs.

Eine aus der DE 3625633 A1 bekannte Mehrzweckliege weist ein starres, aus zwei zusammensteckbaren Hälften bestehendes Rohrgestell auf, an welchem die Liegefläche aufgespannt ist. Die bekannte Liege kann in Kraftfahrzeugen unmittelbar über den Rücklehnen aufgestellt oder auf diesen aufgelegt werden. Bedarfsweise kann die bekannte Liege mit weiteren Zusatzeinrichtungen versehen werden. Mit der bekannten Liege kann der Höhenraum in einem Kraftfahrzeug oberhalb des Sitzbereiches als Ruhelage für Fahrzeuginsassen oder auch für Ablagezwecke ausgenutzt werden. Auch außerhalb des Fahrzeuges kann die Liege verwendet werden. Nach dem Trennen der beiden starren Rohrgestellhälften ergeben sich aber Schwierigkeiten bei der Unterbringung der Liege im Kraftfahrzeug.

Eine weitere Mehrzweckliege ist aus der JP-A-08 19578 bekannt.

Aufgabe der Erfindung ist es, eine vielseitigere Verwendung anzugeben.

Diese Aufgabe wird erfindungsgemäß durch die Merkmale des Patentanspruches 1 gelöst.

Die Unteransprüche beinhalten vorteilhafte Weiterbildungen der Erfindung.

Bei der Verwendung einer Mehrzweckliege nach der Erfindung wird die Liegefläche von einem aufrollbaren Material gebildet, an dessen beiden Längskanten Aufnahmeeinrichtungen für die Längsstabilität der Liegefläche erhöhende Holme vorgesehen sind. Die Holme sind in der Aufnahmeeinrichtung, welche beispielsweise in Form von Schlaufen oder als beispielsweise aus dem Liegeflächenmaterial bestehende Röhren an den Längskanten der Liegefläche vorgesehen sind, entfernbar aufgenommen. Die Holme können in diese Aufnahmeeinrichtungen eingesteckt und wieder entfernt werden. Für die Querstabilität der Liegefläche sind zumindest zwei Abstandhalter lösbar mit den beiden Holmen verbunden. Durch die Abstandhalter werden die beiden Holme etwa in der Breite der Liegefläche im Abstand voneinander gehalten. Hierdurch ist die Liegefläche ausgebreitet und insbesondere in leicht gespanntem Zustand an dem aus den Holmen und den Abstandhaltern bestehenden Rahmen oder Gestell angeordnet. Das aufrollbare Material, welches die Liegefläche bildet, kann beispielsweise als Netz ausgebildet sein, es ist jedoch auch ein geeigneter textiler Werkstoff oder strapazierfähiges Tuch zur Bildung der Liegefläche verwendbar.

Bei Nichtgebrauch werden die Holme und die Abstandhalter des zerlegbaren Rahmens voneinander gelöst. Das die Liegefläche bildende Material, beispielsweise das Liegenetz, wird um einen der beiden Holme gewickelt. Mit dem anderen Holm und den beiden Abstandhaltern lässt sich die so zerlegte Liege an einer geeigneten Stelle in einem Fahrzeug, beispielsweise in einer Haltevorrichtung an der Fahrerhausrückwand des Fahrzeugs unterbringen und festzurren.

Die Aufhängeeinrichtung kann an wenigstens vier Stellen, welche vorzugsweise an den Längskanten der die Liegefläche bildenden Materialbahn vorgesehen sind, befestigt sein. Hierzu können Gurte oder Aufhängeschlaufen oder dergleichen verwendet werden. Im Fahrzeuginnern, insbesondere im Fahrerhaus des Fahrzeugs, sind entsprechende Aufhängepunkte vorgesehen, in denen die Gurte bzw. Schlaufen, welche die Aufhängeeinrichtung bilden, eingehängt werden, so dass die Mehrzweckliege in diesem Fall als Schlafliege im Fahrzeug, insbesondere dessen Fahrerhaus, aufgehängt verwendbar ist.

Da das Gestell bzw. der Rahmen der Mehrzweckliege zerlegbar ist, kann die Liegefläche, insbesondere das Liegenetz, nach Entfernung der Holme und Abstandhalter des Gestells mit Hilfe der Gurte bzw. Aufhängeschlaufen auch als Hängematte im Fahrzeug, beispielsweise im Fahrerhaus des Fahrzeugs, aufgehängt werden.

Ferner kann das aus den Holmen und den Abstandhaltern bestehende Gestell der Mehrzweckliege schwenkbare oder vorzugsweise lösbare Fußstützen aufweisen. Die Fußstützen können Bügelform aufweisen, wobei diese bügelförmigen Fußstützen, welche in die Holme lösbar eingesteckt sind, bei entsprechender Festigkeit gleichzeitig Abstandhalterfunktion aufweisen.

Ferner können in Verlängerung der beiden Längsholme Handgriffe vorgesehen sein oder lösbar am Gestell durch Schraubenverbindungen oder Steckverbindungen befestigt werden.

Ferner kann die die Liegefläche bildende aufrollbare Bahn, insbesondere das Liegenetz, auch die Funktion eines Rückhalte- bzw. Verstau- oder Gepäcknetzes im Fahrzeuginnenraum, insbesondere Fahrerhaus eines Gelände- oder Militärfahrzeugs erfüllen. Hierzu kann die Liegefläche mit einem der beiden Längsholme in einer entsprechenden Haltevorrichtung im Fahrzeuginnenraum an einer Längskante fixiert werden und vor oder über zu verstauenden Gegenständen angeordnet an der anderen Längskante im Fahrzeug, beispielsweise mit Spanngurten abgespannt werden.

Die Erfindung kommt vorzugsweise bei Militärfahrzeugen, insbesondere im Fahrerhaus eines Militärfahrzeugs, aber auch bei Geländefahrzeugen, Nutzfahrzeugen und dergleichen aufgrund seiner vielseitigen Verwendbarkeit und raumsparenden Unterbringung bei Nichtgebrauch zum Einsatz.

Nachstehend ist die Erfindung anhand mehrerer in der Zeichnung dargestellter Ausführungsund Anwendungsbeispiele derselben noch näher erläutert.

Es zeigt
- Fig. 1: einen Querschnitt durch ein Fahrerhaus eines Militärfahrzeugs mit zwei darin als Schlafliegen aufgehängten Mehrzweckliegen in Ansicht von vorne,
- Fig. 2: einen Längsschnitt durch das Fahrerhaus des Fahrzeugs gemäß Fig. 1, aus dem die beiden als Schlafliegen aufgehängten Mehrzweckliegen im Querschnitt ersichtlich sind,
- Fig. 3: eine perspektivische Draufsicht auf ein als Netz ausgebildetes Ausführungsbeispiel eines Liegeflächenmaterials der Mehrzweckliege,
- Fig. 4: ein Ausführungsbeispiel der Mehrzweckliege,
- Fig. 5: ein weiteres Ausführungsbeispiel der Mehrzweckliege,
- Fig. 6: ein weiteres Ausführungsbeispiel der Mehrzweckliege,
- Fig. 7: einen Querschnitt durch das Fahrerhaus des Fahrzeugs gemäß Fig. 1, 2, aus dem die Einspannung eines Liegenetzes als Verstau- bzw. Rückhaltenetz ersichtlich ist, und
- Fig. 8: einen Längsschnitt durch das Fahrerhaus des Fahrzeugs gemäß Fig. 7, aus dem die Einspannung eines Liegenetzes als Verstau- bzw. Rückhaltenetz und die Verstauung von Teilen der Mehrzweckliegen an der Fahrerhausrückwand im Querschnitt ersichtlich ist.

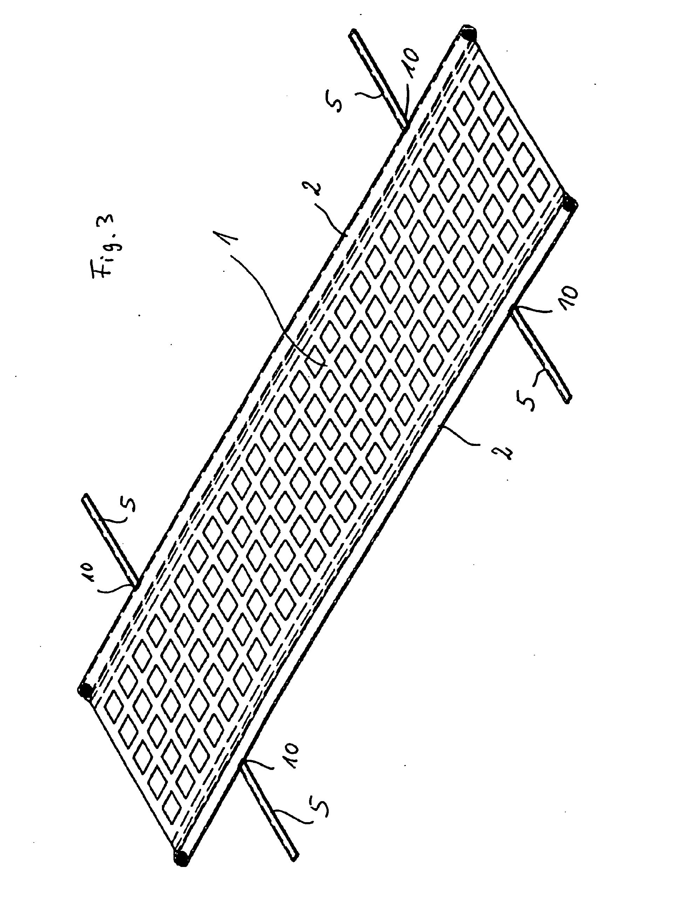

Die in den Figuren dargestellte Mehrzweckliege weist ein die Liegefläche bildendes aufrollbares Liegenmaterial 1 mit Aufnahmeeinrichtungen 2 und einen zerlegbaren Rahmen auf, welcher aus zwei Holmen 3 sowie zwei Abstandhaltern 4, besteht, die vorzugsweise an den Holmenden anzubringen sind. Die Holme 3 und die Abstandhalter 4 können aus stabilen Rohren, insbesondere Metallrohren hergestellt sein. Die beiden Holme 3 sind in die Aufnahmeeinrichtungen 2, welche sich an den Längskanten des aufrollbaren Liegeflächenmaterials 1 erstrecken, einsteckbar. Die Aufnahmeeinrichtungen 2 können durch Aufnahmeröhren gebildet sein, welche z. B. durch Vernähen des Liegeflächenmaterials 1 an den Längskanten hergestellt sind. Anstelle der längsseits durchgehenden Aufnahmeröhren können die Aufnahmeeinrichtungen 2 auch als Aufnahmeschlaufen an den Längskanten des aufrollbaren Liegeflächenmaterials 1 vorgesehen sein. Vorzugsweise besteht das Liegeflächenmaterial aus einem Netz, wie es in perspektivischer Ansicht von oben aus der Fig. 3 zu ersehen ist.

Die beiden Abstandhalter 4 sind beispielsweise durch Steckverbindungen mit den Holmen 3 lösbar verbunden. Anstelle solcher Steckverbindungen können aber auch Schraubenverbindungen vorgesehen sein. Durch die Abstandhalter 4 wird das Liegeflächenmaterial 1 zwischen den beiden Holmen 3, welche die Längsstabilität der Mehrzweckliege gewährleisten, in einem leichtgespannten Zustand gehalten.

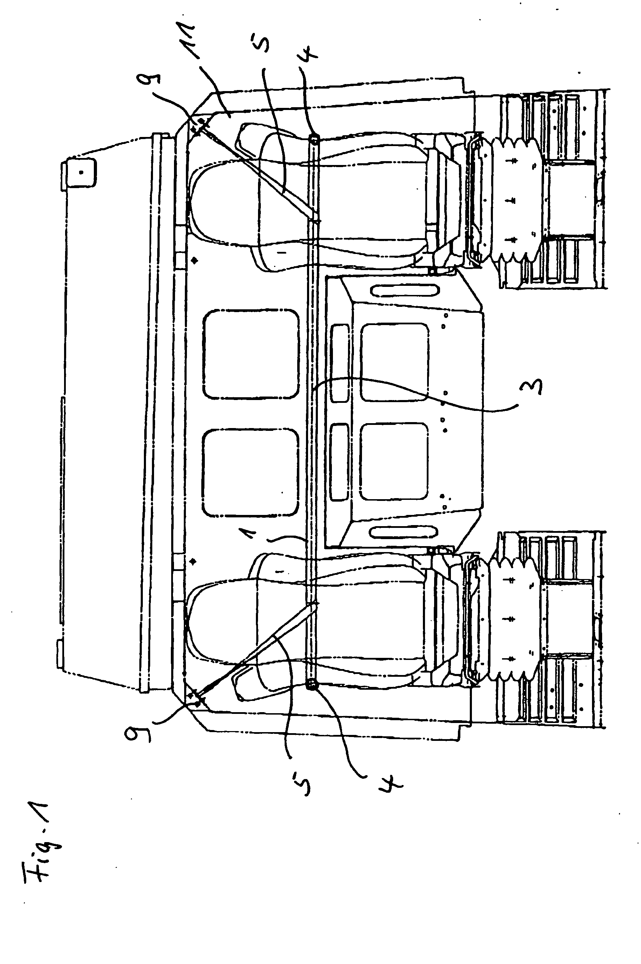

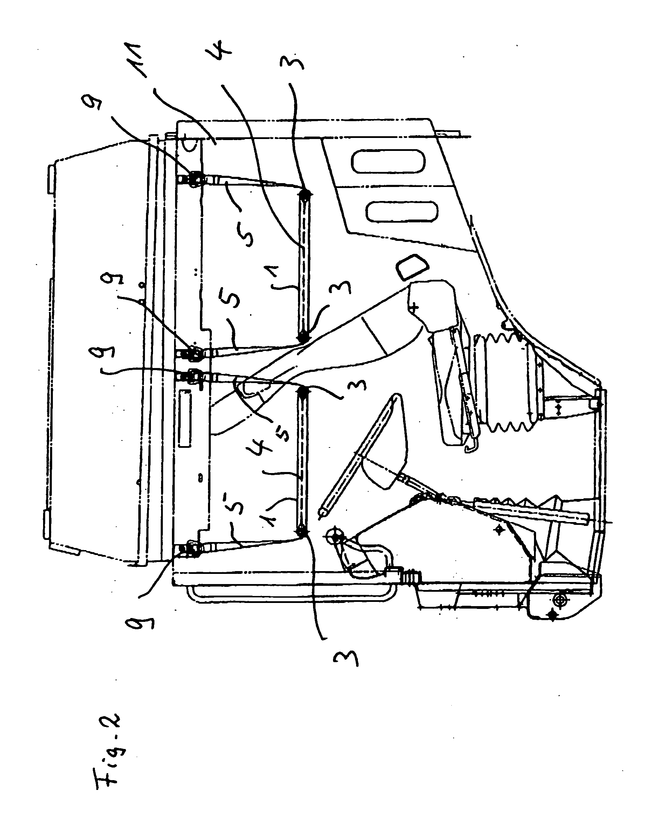

In einem Anwendungsfall kann die Mehrzweckliege als Schlafliege in einem Fahrzeug, insbesondere Fahrerhaus eines Militärfahrzeugs aufgehängt sein, wie aus Fig. 1 und 2 ersichtlich. Hierzu ist eine Aufhängeeinrichtung in Form von Gurten oder Aufhängeschlaufen 5 vorgesehen. Beim dargestellten Ausführungsbeispiel besitzt die Mehrzweckliege an ihrem Liegeflächenmaterial 1 außen vier Aufhängeschlaufen 5. Diese Aufhängeschlaufen 5 sind an seitlichen Befestigungsstellen 10 am Liegeflächenmaterial 1 befestigt (Fig. 3), z. B. durch Annähen. Im Fahrzeug, insbesondere im Fahrerhaus 11 sind für jede der beiden hier als Schlafliegen aufgehängten Mehrzweckliegen vier Aufnahmestellen 9 vorgesehen. Auf diese Weise können zwei Mehrzweckliegen als Schlafliegen, die sich hintereinander in Querrichtung des Fahrerhauses 11 erstrecken, in den Aufnahmestellen 9 beispielsweise im Deckenbereich des Fahrerhauses oder Fahrzeugs aufgehängt werden, siehe Fig. 2.

Da der Rahmen bzw. das Gestell, welches von den beiden Holmen 3 und den beiden Abstandhaltern 4 gebildet wird, zerlegbar ist, kann das Liegeflächenmaterial 1 auch ohne das Gestell bzw. den Rahmen mit den Schlaufen 5 in den Aufnahmestellen 9, dann eine Hängematte bildend, im Fahrzeug bzw. Fahrerhaus 11 aufgehängt sein.

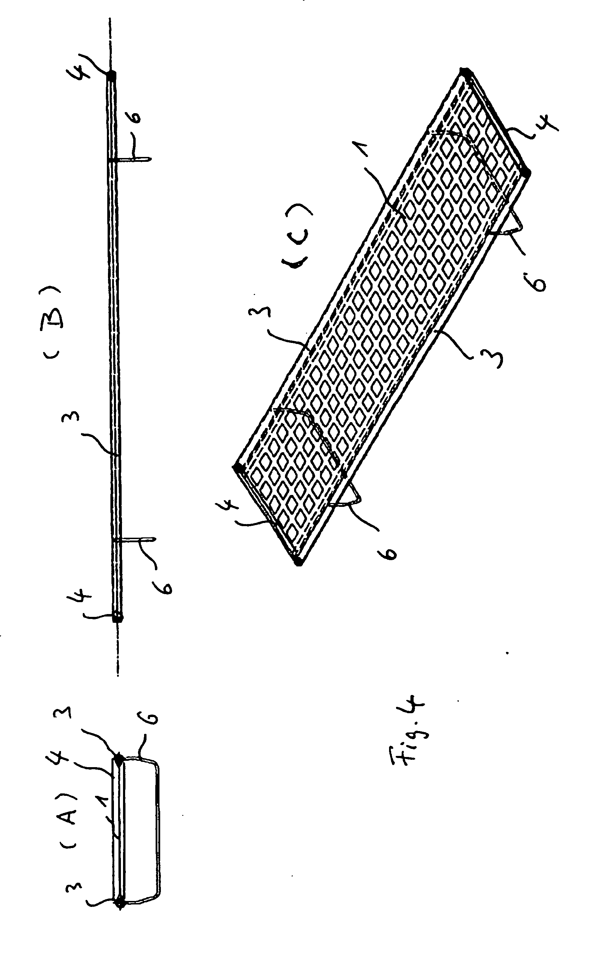

An den Abstandhaltern 4 oder Holmen 3 können klappbare oder lösbare Fußstützen 6 vorgesehen sein. Die Fußstützen 6 können als Bügel (Figuren 4, 5, 6), welche sich über die gesamte Breite der Mehrzweckliege erstrecken, oder als einzelne Füße ausgebildet sein. Zur lösbaren Befestigung können die Fußstützen 6 durch Steckverbindungen oder im Falle der einzelnen Füße auch durch Schraubverbindungen mit den Holmen 3 oder den Abstandhaltern 4 verbunden werden.

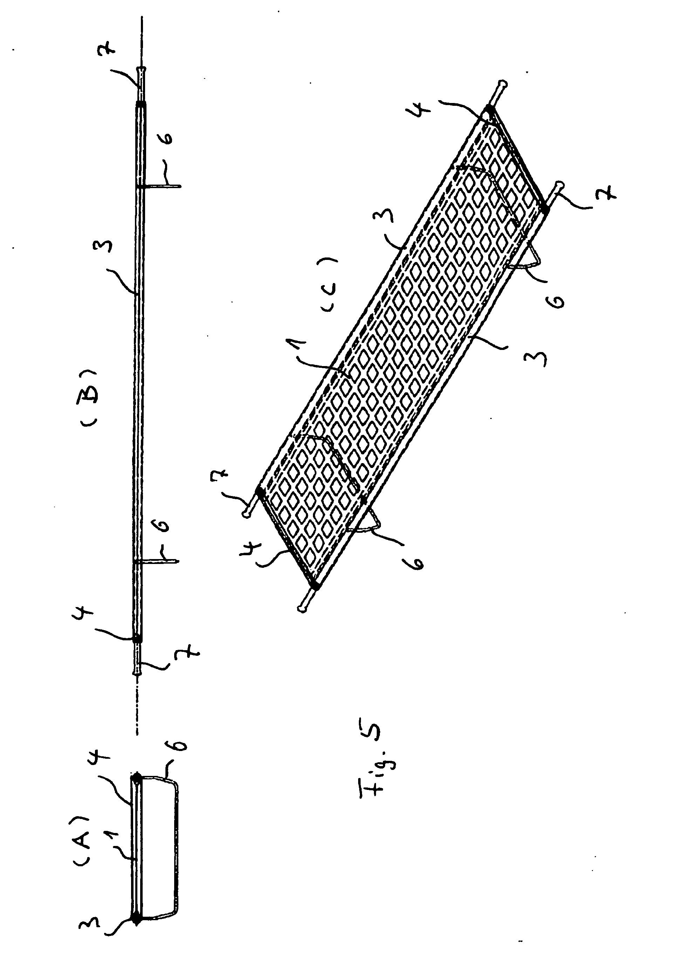

Am zerlegbaren Rahmen, insbesondere an den Abstandhaltern 4 können Handgriffe 7 (Fig. 5) lösbar, beispielsweise durch Schraubenverbindungen befestigt werden.

In den Ausführungsbeispielen der Figuren 4, 5 und 6 sind in den Darstellungen (A) Vorderansichten, in den Darstellungen (B) Seitenansichten und in den Darstellungen (C) perspektivische Ansichten schräg von oben der Mehrzweckliegen ersichtlich. Bei der in der Figur 4 dargestellten Ausführungsform können bügelförmige Fußstützen 6 lösbar in dafür in den Holmen 3 vorgesehen Steckbuchsen eingesteckt werden. Die bügelförmigen Fußstützen befinden sich dabei etwa im Bereich der endseitigen Drittel der Längsausdehnung der Mehrzweckliege. Die Enden der Holme 3 sind mit den Abstandhaltern 4 verbunden. Bei dem in der Figur 5 dargestellten Ausführungsbeispiel sind die Handgriffe 7, wie schon erläutert, lösbar, beispielsweise durch Steckverbindungen oder Schraubenverbindungen mit den Holmen 3 und/oder Abstandhaltern 4 lösbar verbunden.

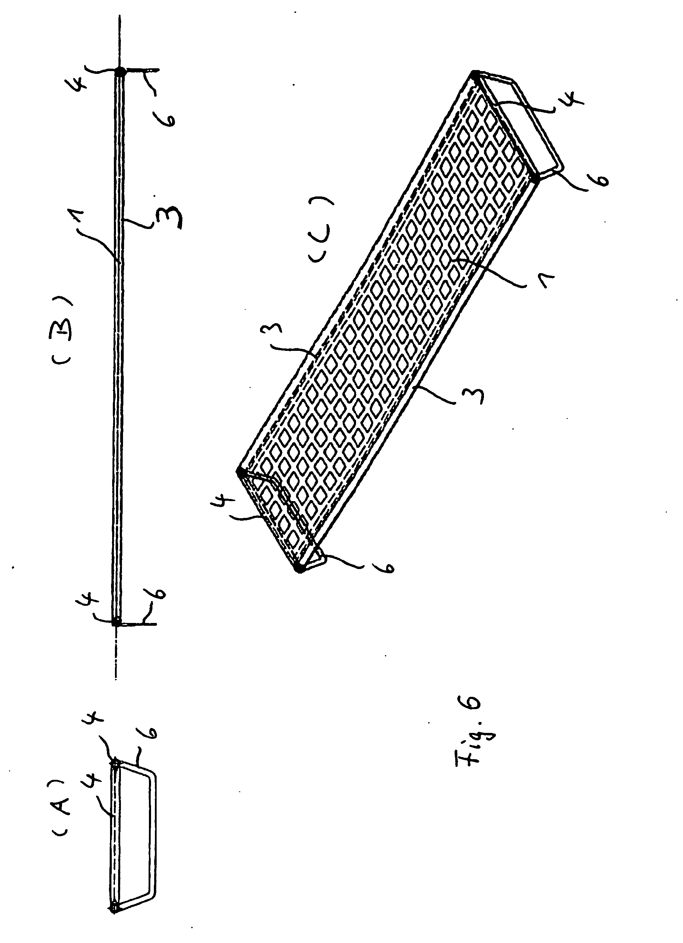

Bei dem in Figur 6 dargestellten Ausführungsbeispiel sind mit den Enden der Holme 3 die Abstandhalter 4 lösbar verbunden. Mit den Abstandhaltern 4 oder mit den Holmenenden sind die bügelförmigen Fußstützen 6 lösbar verbunden. Es ist jedoch auch möglich, die Abstandhalter 4 und die Fußstützen 6 aus einem Stück zu bilden und in die Holmenenden lösbar einzusetzen.

Die Abstandhalter 4 der Ausführungsbeispiele können in vom Liegeflächenmaterial 1 gebildete Aufnahmeröhren oder Aufnahmeschlaufen lösbar eingesteckt sein. Diese Aufnahmeröhren oder Aufnahmeschlaufen können durch Vernähen fest mit dem Liegeflächenmaterial verbunden sein oder durch Klettverschlüsse oder Druckknopfverbindungen und dergleichen beim Umlegen um die Abstandhalter 4 lösbar mit dem Liegeflächenmaterial 1 verbunden sein. Auch die an den Längskanten des Liegeflächenmaterials 1 für die Holme 3 gebildeten Aufnahmeeinrichtungen 2 können in dieser Weise ausgebildet sein.

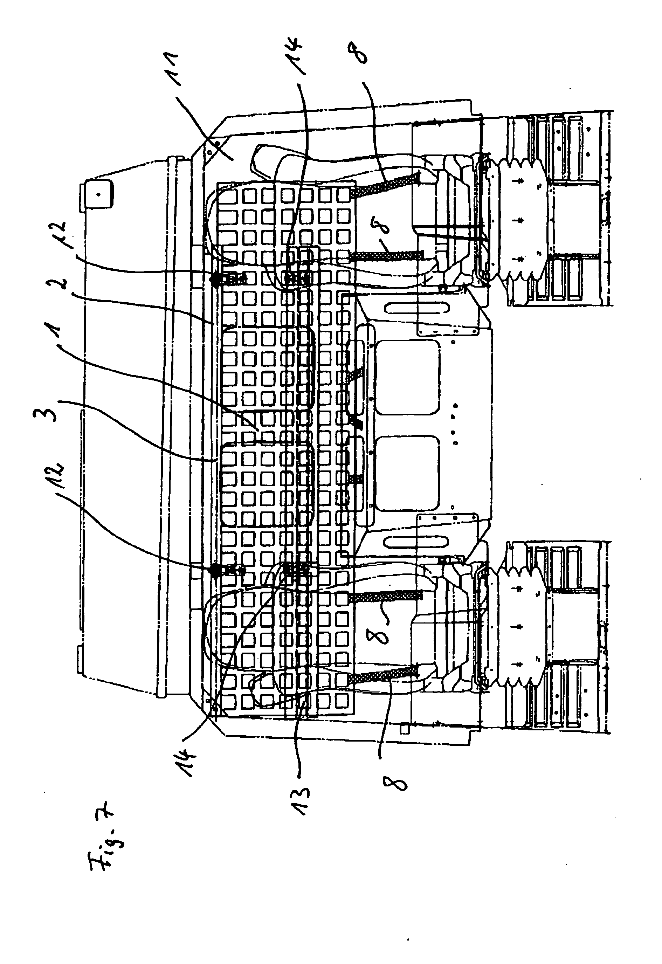

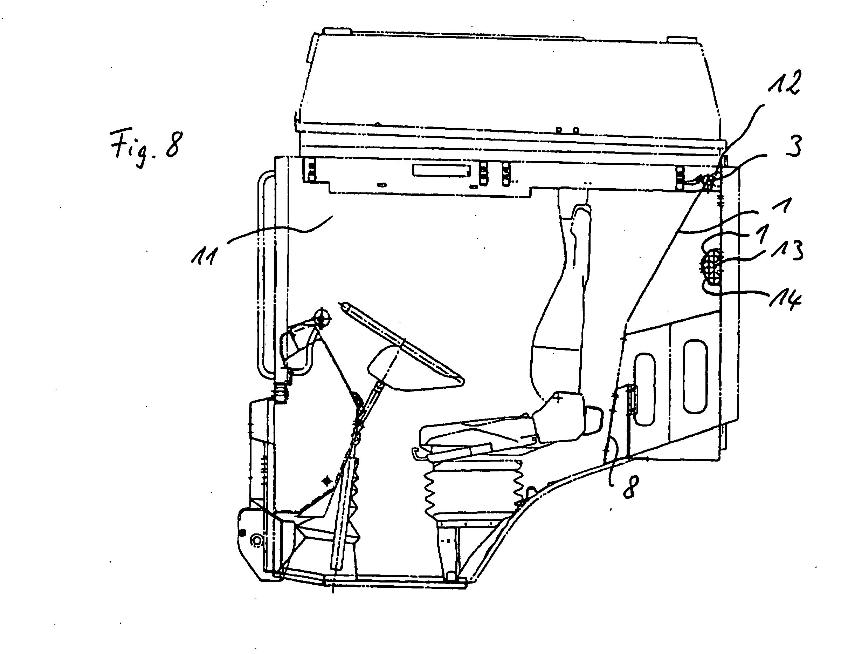

Wie aus den Fig. 7 und 8 zu ersehen ist, lässt sich das insbesondere als Netz ausgebildete Liegeflächenmaterial 1 als Rückhalte- bzw. Verstaunetz verwenden. Hierzu wird ein Holm 3 in der Aufnahmeeinrichtung 2 belassen und der andere Holm aus seiner Aufnahmeeinrichtung 2 entfernt. Für den oben liegenden Holm 3 sind im Fahrerhaus 11 Halter 12 vorgesehen, mit denen die eine Längskante des Liegeflächenmaterials 1 oben im Fahrerhaus 11 befestigt werden kann. An der unten liegenden Kante wird das Liegeflächenmaterial 1 mit Hilfe von Spanngurten 8, Spannschnüren oder dergleichen im Fahrerhaus 11 abgespannt. Hierdurch erreicht man ein Rückhalte- bzw. Verstaunetz vor bzw. über verschiedensten Gepäckstücken und Gegenständen, welche im Fahrzeug bzw. im Fahrerhaus 11 mitgeführt werden.

Jener Holm 3, welcher zu dem als Rückhalte- bzw. Verstaunetz verwendeten Liegeflächenmaterial 1 der einen Mehrzweckliege gehört, sowie die beiden Holme 3 der anderen Mehrzweckliege und gegebenenfalls auch die Abstandshalter können mittels des aufrollbaren Liegeflächenmaterials 1 der anderen Mehrzweckliege zu einem kompakten Paket 13 zusammengerollt werden. Dieses Paket 13 kann in dem hinter dem Rückhalte- bzw. Verstaunetz vorhandenen Raum, vorzugsweise an der Rückwand des Fahrerhauses 11 des Fahrzeugs mit geeigneten Befestigungsmitteln 14 festgezurrt werden.

### Bezugszeichenliste

- 1: Liegeflächenmaterial
- 2: Aufnahmeeinrichtungen
- 3: Holme
- 4: Abstandshalter
- 5: Aufhängeschlaufen
- 6: Fußstützen
- 7: Handgriffe
- 8: Spanngurte
- 9: Aufnahmestellen
- 10: Befestigungsstellen
- 11: Fahrerhaus
- 12: Halter
- 13: Paket
- 14: Befestigungsmittel

## Patentansprüche

1. Verwendung einer Mehrzweckliege mit einer Liegefläche für eine Person innerhalb eines Kraftfahrzeugs, insbesondere Militärfahrzeugs, wobei die Mehrzweckliege folgende Merkmale aufweist
- ein die Liegefläche bildendes aufrollbares Liegeflächenmaterial (1),
- einen zerlegbaren Rahmen, welcher zwei Holme (3), von denen jeder in einer Aufnahmeeinrichtung (2) an den Längskanten des Liegeflächenmaterials (1) entfernbar aufgenommen ist, und außerdem zwei Abstandshalter (4) aufweist, welche lösbar mit den Holmen (3) verbunden sind, und
- eine Aufhängeeinrichtung (5) zum Ein- bzw. Aufhängen der ausgebreiteten Liegefläche im Innenraum des Fahrzeugs.

2. Verwendung einer Liege nach Anspruch 1, **dadurch gekennzeichnet, dass** die Aufhängeeinrichtung an wenigstens vier Befestigungsstellen (10) am Liegeflächenmaterial (1) befestigt ist.

3. Verwendung einer Liege nach Anspruch 1 oder 2, **dadurch gekennzeichnet, dass** die Aufhängeeinrichtung durch Gurte oder Aufhängeschlaufen (5) gebildet ist.

4. Verwendung einer Liege nach einem der Ansprüche 1 bis 3, **dadurch gekennzeichnet, dass** am zerlegbaren Rahmen schwenkbare oder lösbare Fußstützen (6) und/oder Handgriffe (7) vorgesehen sind.

5. Verwendung einer Liege nach einem der Ansprüche 1 bis 4, **dadurch gekennzeichnet, dass** die Liegeflächenbahn (1) als Verstau- oder Gepäcknetz im Innenraum, insbesondere Fahrerhaus (11), eines Militärfahrzeugs befestigt ist.

6. Verwendung einer Liege nach einem der Ansprüche 1 bis 5, **dadurch gekennzeichnet, dass** das Liegeflächenmaterial (1) durch ein Netz oder Tuchmaterial gebildet ist.

7. Verwendung einer Liege nach einem der Ansprüche 1 bis 6, **dadurch gekennzeichnet, dass** das Liegeflächenmaterial (1) zum Umwickeln eines die Holme (3) und die Abstandhalter (4) enthaltenden Pakets (13) ausgebildet ist.

## Claims

1. Use of a multi-purpose bunk with a lying surface for one person on board a motor vehicle, in particular a military vehicle, whereby the multi-purpose bunk has the following features:
• a material (1) which forms the lying surface (1) and can be rolled up,
• a frame which can be disassembled and is provided with two struts (3), each of which is removably supported in a support device (2) on the longitudinal edges of the lying-surface material (1), and also with two spacers (4) detachably connected with said struts (3), and
• a suspension device (5) for hooking into place the extended lying surface in the interior of the vehicle.

2. Use of a bunk according to Claim 1, **characterised in that** the suspension device is fastened to at least four fastening points (10) on the lying-surface material (1).

3. Use of a bunk according to Claim 1 or 2, **characterised in that** the suspension device is formed by belts or suspension loops (5).

4. Use of a bunk according to one of the Claims 1 to 3, **characterised in that** slewable or detachable footrests (6) and/or handles (7) are provided on the frame which can be disassembled.

5. Use of a bunk according to one of the Claims 1 to 4, **characterised in that** the lying-surface area (1) is attached as a storage or baggage net in the vehicle interior, particularly in the cab (11), of a military vehicle.

6. Use of a bunk according to one of the Claims 1 to 5, **characterised in that** the lying-surface material (1) is provided in the form of a net or of cloth material.

7. Use of a bunk according to one of the Claims 1 to 6, **characterised in that** the lying-surface material (1) is designed for wrapping a package (13) containing the struts (3) and the spacers (4).

## Revendications

1. Utilisation d'une couchette multifonctions dotée d'une surface de couchage pour une personne à l'intérieur d'un véhicule à moteur, en particulier d'un véhicule militaire, auquel cas la couchette multifonctions présente les caractéristiques suivantes :
- un matériau de couchette (1) enroulable constituant la surface de couchage,
- un cadre démontable qui présente deux montants (3), parmi lesquels chacun est logé de manière extractible dans un dispositif de logement (2) sur les bords longitudinaux du matériau de couchette (1), et deux barres de retenue (4) reliées aux montants (3) de manière amovible, et
- un dispositif de suspension (5) pour accrocher et suspendre la couchette déployée dans l'habitacle du véhicule.

2. Utilisation d'une couchette selon la revendication 1, **caractérisée en ce que** le dispositif de suspension est attaché au moins à quatre points de fixation (10) sur le matériau de couchette (1).

3. Utilisation d'une couchette selon la revendication 1 ou 2, **caractérisée en ce que** le dispositif de suspension est constitué de ceintures ou de boucles de suspension (5).

4. Utilisation d'une couchette selon les revendications 1 à 3, **caractérisée en ce que** des repose-pied (6) pivotables ou amovibles et/ou des poignées (7) sont prévus sur le cadre démontable.

5. Utilisation d'une couchette selon les revendications 1 à 4, **caractérisée en ce que** la trame de couchette (1) est fixée dans l'habitacle, en particulier dans la cabine (11) comme filet de rangement ou à bagages.

6. Utilisation d'une couchette selon les revendications 1 à 5, **caractérisée en ce que** le matériau de la couchette (1) est constitué d'un filet ou d'un drap.

7. Utilisation d'une couchette selon les revendications 1 à 6, **caractérisée en ce que** le matériau de couchette (1) est formé de sorte à envelopper un paquet (13) contenant les montants (3) et les supports entretoises (4).
